(19) Europäisches Patentamt
European Patent Office
Office européen des brevets

(11) **EP 2 977 297 B1**

(12) **EUROPÄISCHE PATENTSCHRIFT**

(45) Veröffentlichungstag und Bekanntmachung des Hinweises auf die Patenterteilung:
**21.06.2017   Patentblatt 2017/25**

(51) Int Cl.:
***B62D 15/02*** *(2006.01)*

(21) Anmeldenummer: **15177795.0**

(22) Anmeldetag: **22.07.2015**

(54) **VERFAHREN ZUM BESTIMMEN EINES LENKWINKELS EINES KRAFTFAHRZEUGS, FAHRERASSISTENZSYSTEM SOWIE KRAFTFAHRZEUG**

METHOD FOR DETERMINATION OF A STEERING ANGLE OF A MOTOR VEHICLE, DRIVER ASSISTANCE SYSTEM AND MOTOR VEHICLE

PROCEDE DE DETERMINATION D'UN ANGLE DE DIRECTION D'UN VEHICULE AUTOMOBILE, DISPOSITIF D'ASSISTANCE ET VEHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2014   DE 102014110568**

(43) Veröffentlichungstag der Anmeldung:
**27.01.2016   Patentblatt 2016/04**

(73) Patentinhaber: **Valeo Schalter und Sensoren GmbH**
**74321 Bietigheim-Bissingen (DE)**

(72) Erfinder:
• **Bammert, Jens**
  **74321 Bietigheim-Bissingen (DE)**
• **Bariant, Jean-Francois**
  **74321 Bietigheim-Bissingen (DE)**

(56) Entgegenhaltungen:
**EP-A1- 1 445 172**          **WO-A1-2005/085042**
**DE-A1-102009 000 726**     **DE-A1-102009 020 157**

**Beschreibung**

Die vorliegende Erfindung betrifft ein Verfahren zum Bestimmen eines aktuellen Lenkwinkels eines Kraftfahrzeugs, bei welchem ein mittels einer Lenkeinrichtung des Kraftfahrzeugs vorgegebener Lenkradwinkel mittels einer Sensoreinrichtung des Kraftfahrzeugs erfasst wird, und der sich infolge der Vorgabe mittels der Lenkeinrichtung eingestellte Lenkwinkel anhand einer vorbestimmten Lenkwinkelkennlinie, welche eine Abhängigkeit des Lenkwinkels von dem Lenkradwinkel beschreibt, mittels einer Steuereinrichtung des Kraftfahrzeugs bestimmt wird. Die Erfindung betrifft außerdem ein Fahrerassistenzsystem zum Durchführen eines solchen Verfahrens sowie ein Kraftfahrzeug mit einem derartigen Fahrerassistenzsystem.

Bei heutigen Fahrerassistenzsystemen wird häufig eine Information über die Eigenbewegung des Kraftfahrzeugs benötigt. Um die Eigenbewegung des Kraftfahrzeugs ermitteln zu können, muss der aktuelle Lenkwinkel des Kraftfahrzeugs bekannt sein. Zur Berechnung der Eigenbewegung werden die Daten von verschiedenen Fahrzeugsensoren benötigt. Beispielsweise können Weginformationen der jeweiligen Räder mit Hilfe entsprechender Radsensoren erfasst werden, welche sogenannte Weggeberimpulse bereitstellen und somit die Anzahl von Umdrehungen beziehungsweise die Radgeschwindigkeit messen. Darüber hinaus kann die Gierrate und/oder die Beschleunigung des Kraftfahrzeugs mit entsprechenden Sensoren erfasst werden.

Zur genauen Ermittlung der Eigenbewegung oder Position des Kraftfahrzeugs muss der aktuelle Lenkwinkel, also eine Auslenkung zumindest eines gelenkten Rades des Kraftfahrzeugs, ermittelt werden. Üblicherweise wird der aktuelle Lenkwinkel unter Verwendung einer Lenkwinkelkennlinie ermittelt, welche die Abhängigkeit des Lenkwinkels von einem Lenkradwinkel oder der Position einer Spurstange beschreibt. Diese Lenkwinkelkennlinie wird üblicherweise durch den jeweiligen Fahrzeughersteller ermittelt und in einem Speicher des Fahrzeugs abgelegt und somit zur Verfügung gestellt.

Um den Lenkradwinkel eines Kraftfahrzeugs genau zu bestimmen, schlägt die den nächstliegenden Stand der Technik bildende EP 1 445 172 A1 vor, einen Lenkradwinkelsensor bereitzustellen, bei welchem die Berechnung des absoluten Lenkradwinkels durch Auswertung eines Codes einer mit der Lenksäule gekoppelten Codescheibe im Hinblick auf die Winkeleinstellung des Lenkrads erfolgt. Dabei ist es weiterhin vorgesehen, dass die Winkelstellung eines Zählrades zusätzlich auch innerhalb einer Umdrehung des Zählerrades ausgewertet wird und diese erfasste präzise Winkelstellung des Lenkrades für die Berechnung des absoluten Lenkradwinkels verwendet wird.

Für die Berechnung der Eigenbewegung des Kraftfahrzeugs sind aus dem Stand der Technik mehrere Modelle bekannt. Beispielsweise kann das Ackermann-Modell verwendet werden, bei welchem die Berechnung der Eigenbewegung in Abhängigkeit von der zurückgelegten Strecke und dem Lenkradwinkel bestimmt wird. Weiterhin kann die Berechnung der Eigenbewegung aus den Weggeberdaten der Räder der Hinterachse bestimmt werden. Dies wird als Zwei-Spur-Odometrie bezeichnet. Die Vier-Rad-Odometrie beschreibt die Berechnung der Eigenbewegung anhand des Lenkwinkels und den jeweiligen Weginformationen aller vier Räder des Kraftfahrzeugs.

Es ist Aufgabe der vorliegenden Erfindung, eine Lösung aufzuzeigen, wie bei einem Verfahren der eingangs genannten Art der aktuelle Lenkwinkel des Kraftfahrzeugs präziser und zuverlässiger bestimmt werden kann.

Diese Aufgabe wird erfindungsgemäß durch ein Verfahren, durch ein Fahrerassistenzsystem sowie durch ein Kraftfahrzeug mit den Merkmalen der jeweiligen unabhängigen Patentansprüche gelöst. Vorteilhafte Ausführungen der vorliegenden Erfindung sind Gegenstand der abhängigen Patentansprüche, der Beschreibung und der Figuren.

Ein erfindungsgemäßes Verfahren dient zum Bestimmen eines aktuellen Lenkwinkels eines Kraftfahrzeugs. Dabei wird ein mittels einer Lenkeinrichtung des Kraftfahrzeugs vorgegebener Lenkradwinkel mittels einer Sensoreinrichtung des Kraftfahrzeugs erfasst. Des Weiteren wird der sich infolge der Vorgabe mittels der Lenkeinrichtung eingestellte Lenkwinkel anhand einer vorbestimmten Lenkwinkelkennlinie, welche eine Abhängigkeit des Lenkwinkels von dem Lenkradwinkel beschreibt, mittels einer Steuereinrichtung des Kraftfahrzeugs bestimmt. Ferner wird eine Verzögerungsfunktion, welche eine zeitliche Verzögerung zwischen der Vorgabe mittels der Lenkeinrichtung und der Einstellung des Lenkwinkels beschreibt, bestimmt und der Lenkwinkel wird zusätzlich in Abhängigkeit von der Verzögerungsfunktion mittels der Steuereinrichtung bestimmt.

Bei dem Verfahren wird ein aktueller Lenkradwinkel bestimmt. Dieser Lenkradwinkel wird durch die Vorgabe einer Lenkeinrichtung festgelegt. Diese Lenkeinrichtung kann beispielsweise eine Lenkhandhabe beziehungsweise ein Lenkrad sein, welches von dem Fahrer verstellt wird. Alternativ dazu kann die Lenkeinrichtung durch einen entsprechenden Aktor gebildet sein, der die Lenkstange entsprechend dreht. Zur Bestimmung des Lenkwinkels, also eines Winkels zwischen einer aktuellen Radebene eines gelenkten Rades des Kraftfahrzeugs und einer Geradeauslaufstellung des Rades, wird üblicherweise eine Lenkwinkelkennlinie beziehungsweise Lenkwinkelübersetzungskennlinie verwendet. Diese beschreibt den Zusammenhang zwischen Lenkwinkel und Lenkradwinkel.

Der vorliegenden Erfindung liegt die Erkenntnis zugrunde, dass sich eine Änderung des Lenkradwinkels nicht direkt beziehungsweise nicht unmittelbar auf die Änderung des Lenkwinkels auswirkt. Eine Änderung des Lenkradwinkels wirkt sich also nicht unmittelbar auf die Bewegung des Kraftfahrzeugs aus. Diese Verzögerung zwischen der Vorgabe des Lenkradwinkels durch die Lenkeinrichtung und der Auslenkung zumindest eines lenkbaren Rades des Kraftfahrzeugs wird vorliegend anhand einer Verzögerungsfunktion berücksichtigt. Auf diese Weise kann der aktuelle Lenkwinkel des Kraftfahrzeugs präziser und zuverlässiger bestimmt werden.

Bevorzugt wird die Verzögerungsfunktion derart bestimmt, dass zwischen der Vorgabe des Lenkradwinkels durch die Lenkeinrichtung und der Einstellung des Lenkwinkels eine konstante zeitliche Verzögerung vorgegeben wird. Mittels der Verzögerungsfunktion kann also eine konstante zeitliche Verzögerung zwischen der Vorgabe des Lenkradwinkels und der Auslenkung des zumindest einen lenkbaren Rades berücksichtigt werden. Die konstante zeitliche Verzögerung kann beispielsweise in einem Bereich zwischen 100 Millisekunden und 300 Millisekunden liegen. Beispielsweise kann die zeitliche Verzögerung 120 Millisekunden betragen. Eine derartige Verzögerungsfunktion, welche eine vorbestimmte konstante Verzögerungszeit berücksichtigt, kann auf einfache Weise bestimmt werden. Zudem kann der aktuelle Lenkwinkel präzise ermittelt werden.

In einer weiteren Ausführungsform wird die Verzögerungsfunktion anhand eines Modells bestimmt, welches eine Kinetik, eine Kinematik und/oder eine Dynamik einer Lenkung des Kraftfahrzeugs beschreibt. Mit anderen Worten beschreibt das Modell die mechanischen Eigenschaften der Lenkung oder zumindest einzelner Bauteile der Lenkung des Kraftfahrzeugs. In dem Modell können ebenso die mechanischen Eigenschaften der Räder, insbesondere der gelenkten Räder, des Kraftfahrzeugs berücksichtigt werden. Wenn das mechanische Zusammenwirken der einzelnen Komponenten beziehungsweise Bauteile der Lenkung bekannt ist, kann anhand des Modells die Verzögerung zwischen der Vorgabe des Lenkradwinkels und der Einstellung des Lenkwinkels genau ermittelt werden.

Weiterhin ist es vorteilhaft, wenn die Verzögerungsfunktion anhand eines Feder-Dämpfer-Modells bestimmt wird. Ein solches Modell kann auch als Masse-Feder-Dämpfer-Modell bezeichnet werden. Hierbei wird berücksichtigt, dass die Lenkung des Kraftfahrzeugs beziehungsweise die einzelnen Bauteile der Lenkung, also das Lenkrad, die Lenksäule, ein Ritzel, eine Spurstange und/oder ein Radträger, und deren mechanische Verbindung untereinander unterschiedliche mechanische Eigenschaften aufweisen können. Durch das Modell kann beschrieben werden, dass die Lenkung beziehungsweise deren Bauteile zu mechanischen Schwingungen fähig sind, die entsprechend gedämpft sind. Auf diese Weise kann die Lenkung des Kraftfahrzeugs genau modelliert und zur Bestimmung der Verzögerungsfunktion herangezogen werden.

In einer weiteren Ausführungsform wird die Verzögerungsfunktion anhand eines Modells bestimmt, welches ein Trägheitsmoment zumindest eines Bauteils der Lenkung des Kraftfahrzeugs beschreibt. Hierbei kann insbesondere das Trägheitsmoment einer Spurstange der Lenkung berücksichtigt werden. Somit kann der Widerstand der Bauteile der Lenkung gegenüber einer Änderung ihrer Bewegung, insbesondere einer Rotationsbewegung, berücksichtigt werden. Auf diese Weise kann das mechanische Verhalten der Lenkung und somit die Verzögerung zwischen der Änderung des Lenkradwinkels und der Verstellung des Lenkwinkels ermittelt werden.

Weiterhin hat es sich vorteilhaft gezeigt, wenn die Verzögerungsfunktion anhand eines Modells bestimmt wird, welches ein proportionales Übertragungsverhalten mit einer Verzögerung zweiter Ordnung beschreibt. Mit anderen Worten wird die Lenkung des Kraftfahrzeugs als $PT_2$-Glied modelliert. Das Modell kann in diesem Fall anhand einer entsprechenden Differenzialgleichung bestimmt werden. Hierbei hat es sich gezeigt, dass anhand eines $PT_2$-Gliedes die mechanischen Eigenschaften der Lenkung besonders präzise bestimmt werden können.

In einer Ausführungsform wird der Lenkradwinkel mittels eines Lenkwinkelsensors des Kraftfahrzeugs bestimmt. Ein solcher Lenkwinkelsensor kann beispielsweise in einem Lenkradmodul des Kraftfahrzeugs angeordnet sein. Der Lenkwinkelsensor kann ein Potentiometer, magnetische Sensoren und/oder optische Sensoren umfassen. Mit dem Lenkwinkelsensor kann ein Einschlagwinkel einer Lenkhandhabe beziehungsweise eines Lenkrades zuverlässig erfasst werden.

In einer weiteren Ausführungsform wird der Lenkradwinkels anhand einer aktuellen Position einer Spurstange des Kraftfahrzeugs erfasst. Hierzu können entsprechende Sensoren verwendet werden, welche eine Bewegung der Spurstange des Kraftfahrzeugs erfassen können. Je nachdem, ob der aktuelle Lenkradwinkel anhand der Signale eines Lenkwinkelsensors oder anhand der Position einer Spurstange bestimmt wird, können unterschiedliche Verzögerungsfunktionen berücksichtigt werden. Auf dieser Weise kann der Lenkwinkel, also eine Auslenkung zumindest eines lenkbaren Rads des Kraftfahrzeugs, zuverlässig bestimmt werden.

Weiterhin ist es vorteilhaft, wenn eine Umdrehungszahl zumindest eines Rades des Kraftfahrzeugs ermittelt wird und anhand der ermittelten Umdrehungszahl und des bestimmten Lenkwinkels eine aktuelle Position des Kraftfahrzeugs bestimmt wird. In diesem Fall wird ein Verfahren zum Bestimmen einer Position des Kraftfahrzeugs bereitgestellt. Dabei ist es auch denkbar, dass die Radgeschwindigkeit zumindest eines Rades des Kraftfahrzeugs ermittelt wird. Es kann vorgesehen sein, dass die Umdrehungszahl von zwei Rädern des Kraftfahrzeugs oder von allen vier Rädern des Kraftfahrzeugs ermittelt wird. Anhand des ermittelten Lenkwinkels, bei dem die Verzögerung zwischen der Einstellung des Lenkradwinkels und der Auslenkung des Rades berücksichtigt wird, kann die Eigenbewegung des Kraftfahrzeugs genauer bestimmt werden.

In einer weiteren Ausführungsform wird das Kraftfahrzeug anhand des bestimmten Lenkwinkels zumindest semi-autonom manövriert. Zum Manövrieren des Kraftfahrzeugs kann der Lenkwinkel, der anhand der Verzögerungsfunktion bestimmt wird, genutzt werden. Dies kann beispielsweise zum Einparken und/oder zum Rangieren des Kraftfahrzeugs verwendet werden. Bei einem semi-autonomen Manövrieren wird die Querführung des Kraftfahrzeugs durch ein Fahrerassistenzsystem automatisch durchgeführt, während es dem Fahrer zugeteilt wird, Gas zu geben und zu bremsen. Beim autonomen Manövrieren übernimmt das Fahrerassistenzsystem zusätzlich auch die Längsführung des Kraftfahrzeugs. Somit kann das Fahrzeug präzise manövriert werden.

Ein erfindungsgemäßes Fahrerassistenzsystem für ein Kraftfahrzeug umfasst eine Steuereinrichtung, welche zum Durchführen eines erfindungsgemäßen Verfahrens ausgebildet ist.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:

Fig. 1    in schematischer Darstellung ein Kraftfahrzeug mit einem Fahrerassistenzsystem gemäß einer Ausführungsform der Erfindung;

Fig. 2    ein Modell, welches eine Verzögerungsfunktion zwischen einer Einstellung eines Lenkradwinkels und einer Einstellung eines Lenkwinkels des Kraftfahrzeug beschreibt;

Fig. 3    ein Diagramm, welches die Position des Kraftfahrzeug für verschiedene Modelle der Bestimmung des Lenkwinkels beschreibt;

Fig. 4    ein Diagramm, weiches den Lenkwinkel in Abhängigkeit von der Zeit für verschiedene Modelle der Beschreibung des Lenkwinkels zeigt; und

Fig. 5    ein Diagramm, welches die Position des Kraftfahrzeugs für verschiedene Modelle der Beschreibung des Lenkwinkels zeigt.

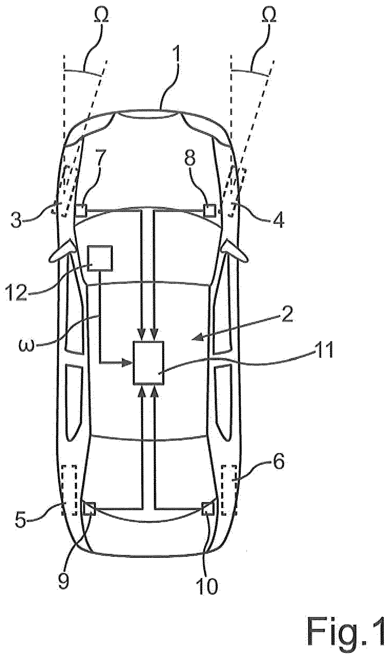

Fig. 1 zeigt ein Kraftfahrzeug 1 in schematischer Darstellung. Das Kraftfahrzeug 1 ist vorliegend als Personenkraftwagen ausgebildet. Das Kraftfahrzeug 1 umfasst ein Fahrerassistenzsystem 2. Zu jedem Rad 3, 4, 5, 6 beinhaltet das Kraftfahrzeug 1 jeweils einen Radsensor 7, 8, 9, 10, welcher zur Erfassung von Umdrehungen des jeweiligen Rades 3, 4, 5, 6 ausgebildet ist. Die Radsensoren 7, 8, 9, 10 geben sogenannte Weggeberimpulse aus, welche die Anzahl von Umdrehungen des jeweiligen Rades 3, 4, 5, 6 charakterisieren. Diese Weggeberimpulse werden an eine Steuereinrichtung 11 des Fahrerassistenzsystems 2 übermittelt. Die Steuereinrichtung 11 kann beispielsweise durch ein Steuergerät (Electronic Control Unit, ECU) des Kraftfahrzeugs 1 gebildet sein. Darüber hinaus können weitere, hier nicht dargestellte Sensoren vorhanden sein, welche beispielsweise dazu dienen, die Fahrzeuggeschwindigkeit, die Fahrzeugbeschleunigung und/oder die Gierrate des Kraftfahrzeugs 1 zu erfassen.

Darüber hinaus umfasst das Fahrerassistenzsystem 2 eine Sensoreinrichtung 12. Die Sensoreinrichtung 12 kann einen Lenkwinkelsensor umfassen, der einen Lenkradwinkel $\omega$ erfassen kann, der von einer Lenkeinrichtung 13 des Kraftfahrzeugs 1 vorgegeben wird. Die Lenkeinrichtung 13 kann beispielsweise durch eine Lenkhandhabe beziehungsweise ein Lenkrad gebildet sein, dass der Fahrer entsprechend bedienen kann. Alternativ oder zusätzlich kann die Lenkeinrichtung 13 durch einen entsprechenden Aktor oder Motor gebildet sein, der beispielsweise die Lenkstange der Lenkung des Kraftfahrzeugs 1 dreht. Der erfasste Lenkradwinkel $\omega$ wird von der Sensoreinrichtung 12 an die Steuereinrichtung 11 übertragen.

In einer hier nicht dargestellten Speichereinheit der Steuereinrichtung 11 ist eine Lenkwinkelkennlinie hinterlegt, die den Zusammenhang zwischen dem Lenkradwinkel $\omega$ und dem Lenkwinkel $\Omega$ beschreibt. Der Lenkwinkel $\Omega$ ist der Winkel zwischen einer aktuellen Radebene der lenkbaren Räder 3, 4, des Kraftfahrzeugs 1 und einer Geradeauslaufstellung der Räder 3, 4. Die Lenkwinkelkennünie kann beispielsweise in Form einer Look-up-Tabelle in der Speichereinheit hinterlegt sein. Die Steuereinrichtung 11 kann unter Verwendung der Lenkwinkelkennlinie anhand des mit der Sensoreinrichtung 12 gemessenen Lenkradwinkels $\omega$ den Lenkwinkel $\Omega$ bestimmen.

Darüber hinaus ist in der Speichereinheit der Steuereinrichtung 11 eine Verzögerungsfunktion hinterlegt. Diese Verzögerungsfunktion beschreibt eine zeitliche Verzögerung zwischen der Vorgabe des Lenkradwinkels $\omega$ und der Einstellung des Lenkwinkels $\Omega$. Die Steuereinrichtung 11 berechnet den Lenkwinkel $\Omega$ also in Abhängigkeit der Lenkwinkelkennlinie und der Verzögerungsfunktion.

Die Verzögerungsfunktion kann derart bestimmt sein, dass sich zwischen der Vorgabe des Lenkradwinkels w und der Einstellung des Lenkwinkels Ω eine konstante zeitliche Verzögerung ergibt. Eine derartige zeitliche Verzögerung kann beispielsweise in einem Bereich zwischen 100 Millisekunden und 300 Millisekunden liegen. Somit kann beispielsweise anhand des erfassten Lenkradwinkels ω mittels der Lenkwinkelkennlinie der Lenkwinkel Ω bestimmt werden. Im Anschluss daran kann die konstante zeitliche Verzögerung berücksichtigt werden.

Die Verzögerungsfunktion kann auch anhand eines Modells bestimmt werden. Ein derartiges Modell kann beispielsweise die mechanischen Eigenschaften der Lenkung des Kraftfahrzeugs 1 beschreiben. So kann beispielsweise die Kinetik, die Kinematik und/oder die Dynamik der Bauteile oder einzelner Bauteile der Lenkung 17 des Kraftfahrzeugs 1 in dem Modell berücksichtigt werden. Derartige Bauteile der Lenkung 17 können beispielsweise das Lenkrad, die Lenksäule, eine Spurstange, ein Ritzel, welches zwischen der Lenksäule und der Spurstange angeordnet ist, und/oder ein Radträger sein.

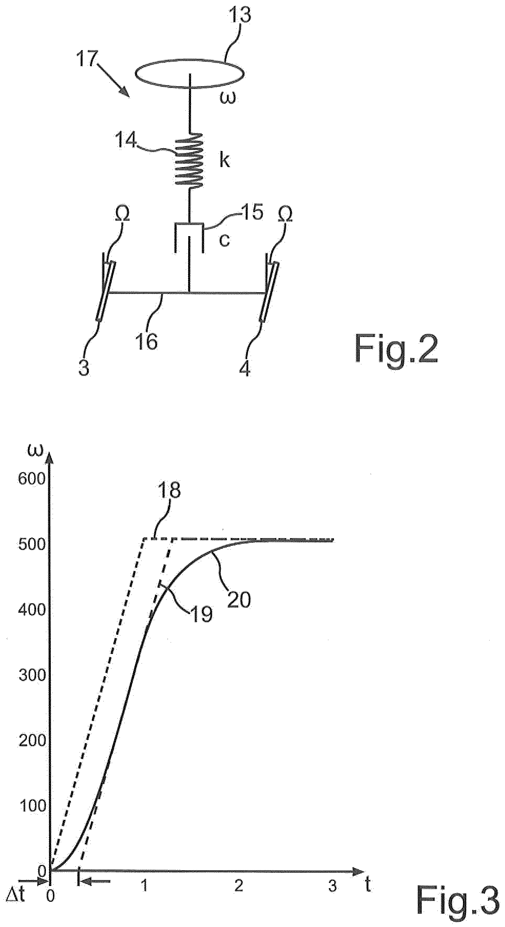

Ein derartiges Modell ist beispielsweise in Fig. 2 gezeigt. Dieses Modell ist als Feder-Dämpfer-Modell ausgestaltet. Die einzelnen Bauteile der Lenkung 17 des Kraftfahrzeugs 1 werden durch eine Feder 14, die eine Federkonstante k und einen Dämpfer 15, der eine Dämpferkonstante c aufweist, beschrieben. Darüber hinaus wird ein Trägheitsmoment I, insbesondere ein Massenträgheitsmoment, der Spurstange 16 des Kraftfahrzeugs 1 berücksichtigt. Das Modell kann insbesondere so gewählt sein, dass durch das Modell ein proportionales Übertragungsverhalten mit einer Verzögerung zweiter Ordnung beschrieben wird. Mit anderen Worten beschreibt das Modell PT$_2$-Glied. Das Feder-Dämpfer-Modell gemäß Fig. 2 kann mit folgender Differenzialgleichung beschrieben werden:

$$I\ddot{\Omega} = k\left(\omega - \Omega\right) - c\dot{\Omega} \ .$$

Darüber hinaus kann es auch vorgesehen sein, dass die mechanischen Eigenschaften der Räder 3, 4, 5, 6 und insbesondere der lenkbaren Räder 3, 4 des Kraftfahrzeugs 1 bei der Bestimmung der Verzögerungsfunktion berücksichtigt werden. Die Räder verformen sich üblicherweise bei einer Lenkbewegung. Dieses Verhalten kann in dem Modell berücksichtigt werden.

Fig. 3 zeigt ein Diagramm, bei welchem auf der Abszisse die Zeit t und auf der Ordinate der Lenkradwinkel ω aufgetragen ist. Vorliegend ist der Fall gezeigt, bei dem die Lenkeinrichtung 13 beziehungsweise das Lenkrad des Kraftfahrzeugs 1 von einer Mittelstellung beziehungsweise Nulllage des Lenkrads bis zu dem maximal möglichen Lenkwinkel ausgelenkt wird. Der Lenkradwinkel w wird also von 0° auf 520° erhöht. Die Kurve 18 beschreibt den Verlauf des Lenkwinkels Ω in Folge der Vorgabe des Lenkradwinkels ω, wobei keine zeitliche Verzögerung berücksichtigt wird. Im Vergleich hierzu zeigt die Kurve 19 den zeitlichen Verlauf des Lenkwinkels Ω, bei dem eine zeitliche Verzögerung durch einen konstanten Wert berücksichtigt wird. In dem vorliegenden Ausführungsbeispiel wird eine zeitliche Verzögerung von 300 Millisekunden berücksichtigt. Dies resultiert in einer Verschiebung der Linie 19 bezüglich der Linie 18 um den Wert Δt. Die durchgezogene Linie 20 zeigt den Verlauf des Lenkwinkels Ω bei welchem der Zusammenhang zwischen dem Lenkradwinkel ω und dem Lenkwinkel Ω gemäß der oben beschriebenen Gleichung berücksichtigt wurde.

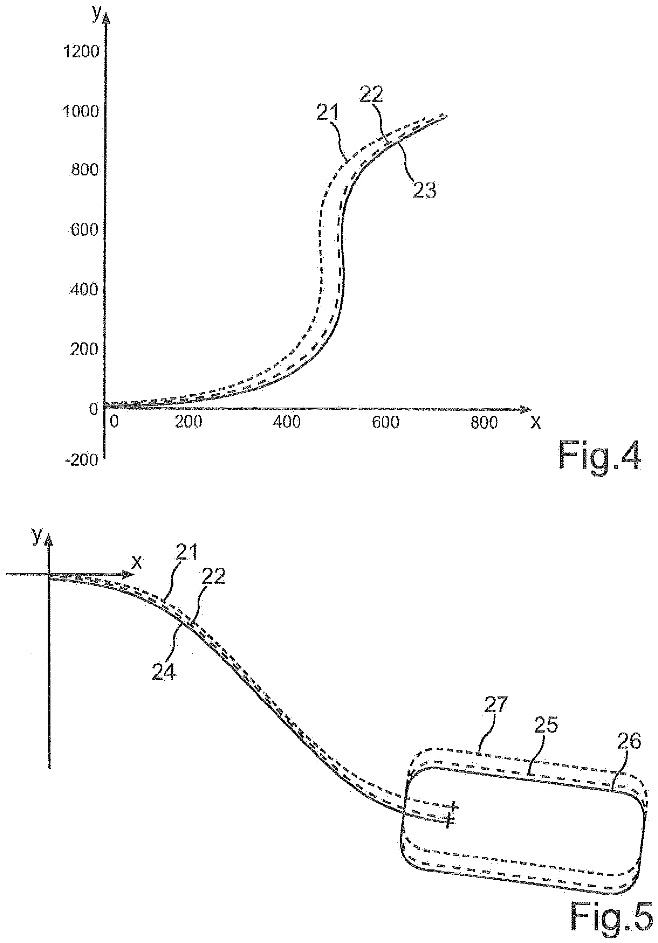

Fig. 4 zeigt anhand der drei Kurven 21, 22, 23 die Positionsänderung des Kraftfahrzeugs 1 bezüglich der beiden Raumrichtungen x und y. Vorliegend wird durch die Kurven 21, 22, 23 der Fall beschrieben, bei welchem beim dem Kraftfahrzeug 1 ausgehend von einem Startpunkt zunächst einen vollen Lenkeinschtag nach links und anschließend einen vollen Lenkeinschlag nach rechts durchführt. Mit anderen Worten wird also eine S-förmige Bahn mit dem Kraftfahrzeug 1 gefahren. Die Kurve 21 beschreibt die Position des Kraftfahrzeugs 1 für den Fall, dass keine zeitliche Verzögerung zwischen dem Lenkradwinkel ω und dem Lenkwinkel Ω berücksichtigt wird. Die Kurve 22 beschreibt den Fall, dass eine konstante zeitliche Verzögerung zwischen der Vorgabe des Lenkradwinkels ω und der Einstellung des Lenkwinkels Ω berücksichtigt wird. Die Kurve 23 beschreibt den Fall, dass der Zusammenhang zwischen dem Lenkradwinkel ω und dem Lenkwinkel Ω anhand der oben beschriebenen Formel berechnet wird. Hier ist zu erkennen, dass sich die beiden Kurven 22 und 23, bei denen die Verzögerungsfunktion berücksichtigt wurde, einen ähnlichen Verlauf aufweisen. Die Kurve 21, bei der keine zeitliche Verzögerung berücksichtigt wurde, zeigt eine deutliche Abweichung zu den Kurven 22 und 23 auf.

Fig. 5 zeigt ein weiteres Diagramm, welches die Positionsänderung des Kraftfahrzeugs 1 bezüglich der beiden Raumrichtungen x und y darstellt. Dabei beschreibt die Kurve 21 die Bewegung des Kraftfahrzeugs 1 für den Fall, dass kein zeitlicher Versatz zwischen der Vorgabe des Lenkradwinkels ω und der Einstellung des Lenkwinkels Ω berücksichtigt wird. Im Vergleich hierzu zeigt die Kurve 22 die Bewegung des Kraftfahrzeugs 1, wenn zwischen der Vorgabe des Lenkradwinkels ω und der Ausgabe des Lenkwinkels Ω eine konstante zeitliche Verzögerung von 120 Millisekunden berücksichtigt wird. Bei den Kurven 21 und 22 ist die Bewegung des Kraftfahrzeugs 1 anhand einer Vier-Rad-Odometrie bestimmt. Die Kurve 24 zeigt die tatsächliche Fahrzeugbewegung, die mit einem Referenzsystem gemessen wurde.

Hierbei ist deutlich zu erkennen, dass die Position 25 des Kraftfahrzeugs 1, die mit der zeitlichen Verzögerung zwischen der Vorgabe des Lenkradwinkels ω und der Ausgabe des Lenkwinkels Ω bestimmt wurde, sehr nahe an der gemessenen Position 26 des Kraftfahrzeugs 1 liegt. Die Position 27 des Kraftfahrzeugs 1, bei der die zeitliche Verzögerung nicht berücksichtigt wurde, zeigt eine deutliche Abweichung zu der gemessenen Position 25 auf. Der Grund hierfür ist, dass in diesem Fall bei der Odometrie mit einem Lenkwinkel gerechnet wird, den das Kraftfahrzeug 1 noch nicht fährt. Somit kann durch die Berücksichtigung der Verzögerungsfunktion der Fehler bei der Positionsbestimmung merklich reduziert werden. Der Lenkwinkels $\Omega$, der in Abhängigkeit von der Verzögerungsfunktion bestimmt wird, kann zur Bestimmung der Eigenbewegung des Kraftfahrzeugs 1 verwendet werden.

**Patentansprüche**

1. Verfahren zum Bestimmen eines aktuellen Lenkwinkels ($\Omega$) eines Kraftfahrzeugs (1), bei welchem ein mittels einer Lenkreinrichtung (13) des Kraftfahrzeugs (1) vorgegebener Lenkradwinkel ($\omega$) mittels einer Sensoreinrichtung (12) des Kraftfahrzeugs (1) erfasst wird, und der sich in Folge der Vorgabe mittels der Lenkeinrichtung (13) eingestellte Lenkwinkel ($\Omega$) anhand einer vorbestimmten Lenkwinkelkennlinie, welche eine Abhängigkeit des Lenkwinkels ($\Omega$) von dem Lenkradwinkel ($\omega$) beschreibt, mittels einer Steuereinrichtung (11) des Kraftfahrzeugs (1) bestimmt wird,
   **dadurch gekennzeichnet, dass**
   eine Verzögerungsfunktion, welche eine zeitliche Verzögerung zwischen der Vorgabe des Lenkradwinkeis ($\omega$) und der Einstellung des Lenkwinkels ($\Omega$) beschreibt, bestimmt wird und der Lenkwinkel ($\Omega$) zusätzlich in Abhängigkeit von der Verzögerungsfunktion mittels der Steuereinrichtung (11) bestimmt wird.

2. Verfahren nach Anspruch 1,
   **dadurch gekennzeichnet, dass**
   die Verzögerungsfunktion derart bestimmt wird, dass zwischen der Vorgabe des Lenkradwinkels ($\omega$) durch die Lenkeinrichtung (13) und der Einstellung des Lenkwinkels ($\Omega$) eine konstante zeitlichen Verzögerung vorgegeben wird.

3. Verfahren nach Anspruch 1 oder 2,
   **dadurch gekennzeichnet, dass**
   die Verzögerungsfunktion anhand eines Modells bestimmt wird, welches eine Kinetik, eine Kinematik und/oder eine Dynamik einer Lenkung des Kraftfahrzeugs (1) beschreibt.

4. Verfahren nach einem der vorhergehenden Ansprüche,
   **dadurch gekennzeichnet, dass**
   die Verzögerungsfunktion anhand eines Feder-Dämpfer-Modells bestimmt wird.

5. Verfahren nach einem der vorhergehenden Ansprüche,
   **dadurch gekennzeichnet, dass**
   die Verzögerungsfunktion anhand eines Modells bestimmt wird, welches ein Trägheitsmoment zumindest eines Bauteils der Lenkung des Kraftfahrzeugs (1) beschreibt.

6. Verfahren nach einem der vorhergehenden Ansprüche,
   **dadurch gekennzeichnet, dass**
   die Verzögerungsfunktion anhand eines Modells bestimmt wird, weiches ein proportionales Übertragungsverhalten mit einer Verzögerung zweiter Ordnung beschreibt.

7. Verfahren nach einem der vorhergehenden Ansprüche,
   **dadurch gekennzeichnet, dass**
   der Lenkradwinkel ($\omega$) mittels eines Lenkwinkelsensors der Sensoreinrichtung (12) des Kraftfahrzeugs (1) erfasst wird.

8. Verfahren nach einem der vorhergehenden Ansprüche,
   **dadurch gekennzeichnet, dass**
   der Lenkradwinkel ($\omega$) anhand einer Position einer Spurstange des Kraftfahrzeugs (1) erfasst wird.

9. Verfahren nach einem der vorhergehenden Ansprüche,
   **dadurch gekennzeichnet, dass**
   eine Umdrehungszahl zumindest eines Rads (3, 4, 5, 6) des Kraftfahrzeugs (1) ermittelt wird und anhand der ermittelten Umdrehungszahl und des bestimmten Lenkwinkels ($\Omega$) eine aktuelle Position des Kraftfahrzeugs (1) bestimmt wird.

10. Verfahren nach einem der vorhergehenden Ansprüche,
    **dadurch gekennzeichnet, dass**
    das Kraftfahrzeug (1) anhand des bestimmten Lenkwinkels ($\Omega$) zumindest semi-autonom manövriert wird.

11. Fahrerassistenzsystem (2) für ein Kraftfahrzeug (1), welches eine Steuereinrichtung (12) aufweist, welche zum Durchführen eines Verfahrens nach einem der vorhergehenden Ansprüche ausgebildet ist.

12. Kraftfahrzeug (1) mit einem Fahrerassistenzsystem (2) nach Anspruch 11.

**Claims**

1. Method for determining a current steering angle ($\Omega$) of a motor vehicle (1), in which a steering wheel angle (ω), predefined by means of a steering device (13) of the motor vehicle (1), is detected by means of a sensor device (12) of the motor vehicle (1), and the steering angle (Ω) which is set by means of the steering device (13) as a result of the predefinition is determined by means of a control device (11) of the motor vehicle (1) on the basis of a predetermined steering angle characteristic curve which describes a dependence of the steering angle (Ω) on the steering wheel angle (ω),
**characterized in that**
a delay function which describes a delay between the predefinition of the steering wheel angle (ω) and the setting of the steering angle (Ω) is determined, and the steering angle (Ω) is determined by the control device (11) additionally as a function of the delay function.

2. Method according to Claim 1,
**characterized in that**
the delay function is determined in such a way that a constant delay is predefined between the predefinition of the steering wheel angle (ω) by the steering device (13) and the setting of the steering angle (Ω).

3. Method according to Claim 1 or 2,
**characterized in that**
the delay function is determined on the basis of a model which describes kinetics, kinematics and/or dynamics of a steering system of the motor vehicle (1).

4. Method according to one of the preceding claims,
**characterized in that**
the delay function is determined on the basis of a spring-damper model.

5. Method according to one of the preceding claims,
**characterized in that**
the delay function is determined on the basis of a model which describes a moment of inertia of at least one component of the steering system of the motor vehicle (1).

6. Method according to one of the preceding claims,
**characterized in that**
the delay function is determined on the basis of a model which describes a proportional transmission behaviour with a second-order delay.

7. Method according to one of the preceding claims,
**characterized in that**
the steering wheel angle (ω) is detected by means of a steering angle sensor of the sensor device (12) of the motor vehicle (1).

8. Method according to one of the preceding claims,
**characterized in that**
the steering wheel angle (ω) is detected on the basis of a position of a track rod of the motor vehicle (1).

9. Method according to one of the preceding claims,
**characterized in that**
a number of revolutions of at least one wheel (3, 4, 5, 6) of the motor vehicle (1) is detected, and a current position of the motor vehicle (1) is determined on the basis of the detected number of revolutions and the determined steering angle (Ω).

10. Method according to one of the preceding claims,
**characterized in that**
the motor vehicle (1) is manoeuvred at least semi-autonomously on the basis of the determined steering angle (Ω).

11. Driver assistance system (2) for a motor vehicle (1), which has a control device (12) which is designed to carry out a method according to one of the preceding claims.

12. Motor vehicle (1) having a driver assistance system (2) according to Claim 11.

**Revendications**

1. Procédé de détermination d'un angle de braquage actuel (Ω) d'un véhicule automobile (1), dans lequel un angle de volant de direction (ω) prédéterminé au moyen d'un dispositif de direction (13) du véhicule automobile (1) est détecté au moyen d'un dispositif capteur (12) du véhicule automobile (1), et l'angle de braquage (Ω) réglé consécutivement à la consigne au moyen du dispositif de direction (13) est déterminé sur la base d'une courbe caractéristique de braquage prédéterminée qui décrit une dépendance de l'angle de braquage (Ω) par rapport à l'angle de volant de direction (ω), au moyen d'un dispositif de commande (11) du véhicule automobile (1),
**caractérisé en ce qu'**une fonction de retard qui décrit un retard temporel entre la consigne d'angle de volant de direction (ω) et l'ajustement de l'angle de braquage (Ω), est déterminé, et **en ce que** l'angle de braquage (Ω) est en outre déterminé au moyen du dispositif de commande (11) d'une façon qui dépend de la fonction de retard.

2. Procédé selon la revendication 1,
**caractérisé en ce que** la fonction de retard est déterminée de manière à ce qu'un retard temporel constant soit prédéfini entre la consigne d'angle de volant de direction (ω) par le dispositif de direction (13) et le réglage de l'angle de braquage (Ω).

3. Procédé selon la revendication 1 ou 2,
**caractérisé en ce que** la fonction de retard est déterminée sur la base d'un modèle qui décrit une cinétique, une cinématique et/ou une dynamique d'une direction du véhicule automobile (1).

4.  Procédé selon l'une quelconque des revendications précédentes,
    **caractérisé en ce que** la fonction de retard est déterminée sur la base d'un modèle à ressort et amortisseur.

5.  Procédé selon l'une quelconque des revendications précédentes,
    **caractérisé en ce que** la fonction de retard est déterminée sur la base d'un modèle qui décrit un moment d'inertie d'au moins un composant de la direction du véhicule automobile (1).

6.  Procédé selon l'une quelconque des revendications précédentes,
    **caractérisé en ce que** la fonction de retard est déterminée sur la base d'un modèle qui décrit un comportement de transmission proportionnel avec un retard du deuxième ordre.

7.  Procédé selon l'une quelconque des revendications précédentes,
    **caractérisé en ce que** l'angle de braquage ($\omega$) est détecté au moyen d'un capteur d'angle de braquage du dispositif capteur (12) du véhicule automobile (1).

8.  Procédé selon l'une quelconque des revendications précédentes,
    **caractérisé en ce que** l'angle de volant de direction ($\omega$) est détecté sur la base d'une position d'une biellette de direction du véhicule automobile (1).

9.  Procédé selon l'une quelconque des revendications précédentes,
    **caractérisé en ce qu'**une vitesse de rotation d'au moins une roue (3, 4, 5, 6) du véhicule automobile (1) est déterminée et **en ce qu'**une position actuelle du véhicule (1) est déterminée sur la base de la vitesse de rotation déterminée et de l'angle de braquage ($\Omega$) déterminé.

10. Procédé selon l'une quelconque des revendications précédentes,
    **caractérisé en ce que** le véhicule automobile (1) est manoeuvré de manière au moins semi-autonome sur la base de l'angle de braquage ($\Omega$) déterminé.

11. Système d'assistance à la conduite (2) destiné à un véhicule automobile (1), qui comporte un dispositif de commande (12) conçu pour mettre en oeuvre un procédé selon l'une quelconque des revendications précédentes.

12. Véhicule automobile (1) comportant un système d'assistance à la conduite (2) selon la revendication 11.

EP 2 977 297 B1

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1445172 A1